# EUROPÄISCHE PATENTSCHRIFT

(11) **EP 3 605 029 B1**
(45) Veröffentlichungstag und Bekanntmachung des Hinweises auf die Patenterteilung: **16.09.2020**
(21) Anmeldenummer: 18186363.0
(22) Anmeldetag: 30.07.2018
(51) Int. Cl.: G01F 23/26

(54) **VERFAHREN ZUM BESTIMMEN EINES SCHALTZUSTANDS EINES IMPEDANZSENSORS UND IMPEDANZSENSOR**
IMPEDANCE SENSOR AND METHOD FOR DETERMINING THE SWITCHING STATE OF AN IMPEDANCE SENSOR
PROCÉDÉ DE DÉTERMINATION D'UN ÉTAT DE COMMUTATION D'UN CAPTEUR D'IMPÉDANCE ET CAPTEUR D'IMPÉDANCE

(43) Veröffentlichungstag der Anmeldung: 05.02.2020
(73) Patentinhaber: VEGA Grieshaber KG, 77709 Wolfach (DE)
(72) Erfinder: Allgaier, Volker, 77761 Haslach i. K. (DE); Fehrenbach, Dominik, 78628 Rottweil (DE)
(74) Vertreter: Patentanwälte Bauer Vorberg Kayser

(56) Entgegenhaltungen:
- EP-A1- 3 118 591
- EP-A1- 3 153 829
- EP-A1- 3 312 571
- DE-A1-102009 060 742

## Beschreibung

Die vorliegende Erfindung betrifft ein Verfahren zum Bestimmen eines Schaltzustands eines Impedanzsensors gemäß dem Oberbegriff des Patentanspruchs 1 und einen Impedanzsensor zur Implementierung des Verfahrens gemäß Patentanspruch 8.

Impedanzgrenzstandsensoren sind grundsätzlich aus dem Stand der Technik, bspw. zur Messung von Grenz- oder Füllständen bekannt. Typische Anwendungen für die Erfassung einer vordefinierten Füllhöhe sind Prozessbehältnisse, wie beispielsweise Prozesstanks, Lagertanks, Silos oder Rohrleitungen in der Prozessindustrie. Impedanzgrenzstandsensoren, werden dabei häufig als sog. Grenzschalter, d.h. zur Bestimmung, ob ein Füllmedium eine bestimmte Füllhöhe, den sog. Grenzstand, über- oder unterschreitet, in unterschiedlichen Flüssigkeiten, sowie granulierten und pulverförmigen Schüttgütern eingesetzt.

DE 10 2009 060742 A1 offenbart ein Verfahren zum Bestimmen eines Schaltzustands eines Impedanzsensors.

Es sind auch andere Arten von Grenzschaltern bzw. Grenzstandsensoren bekannt, die je nach Einsatzgebiet, Prozessbedingungen und Eigenschaften des Füllmediums ausgewählt werden. Neben Impedanzgrenzstandsensoren kommen Sensoren, die nach dem TDR (Time Domain Reflectometry) Prinzip arbeiten, oder Vibrationsgrenzstandsensoren oder kapazitiv arbeitende Sensoren zum Einsatz. Ein Schaltbefehl des Grenzschalters kann beispielsweise Befülleinrichtungen oder Entleereinrichtungen starten oder stoppen um entsprechend ein Überlaufen oder Leerlaufen des jeweiligen Prozessbehältnisses zu vermeiden.

In der vorliegenden Anmeldung werden an Stelle des Begriffs Impedanzgrenzstandsensor der Einfachheit halber auch die Begriffe Impedanzsensor, Grenzschalter und Grenzstandmelder gleichwertig benutzt.

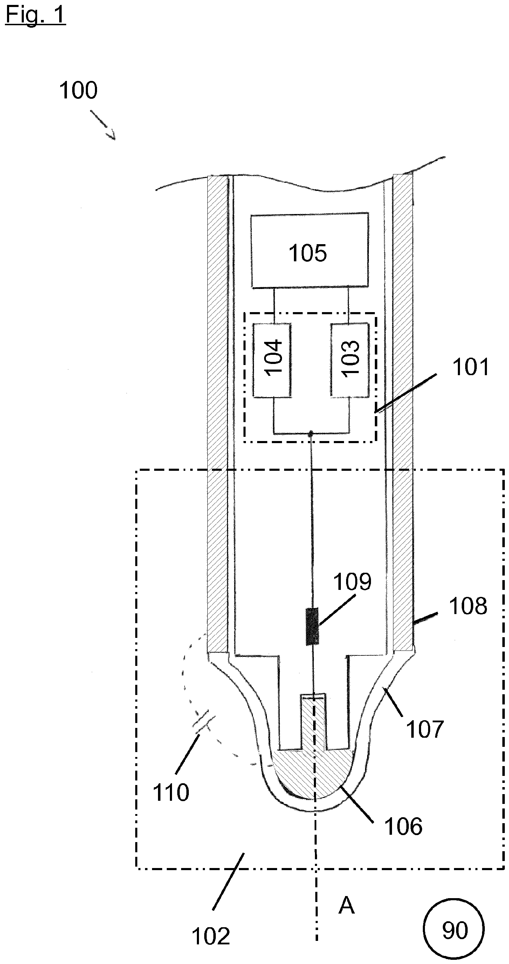

Ein bekannter Impedanzsensor 100 ist in Figur 1 gezeigt.

Figur 1 zeigt ein vereinfachtes Schnittbild mit Schaltungsblöcken eines Impedanzsensor 100 gemäß dem Stand der Technik. Im Wesentlichen besteht der Impedanzsensor 100, gemäß dem Stand der Technik aus einer Elektronikeinheit 101 und einer Messsonde 102. Die Messsonde 102, ist im vorliegenden Ausführungsbeispiel als Serienschwingkreis, nachfolgend auch Messschwingkreis genannt, ausgebildet. Zwischen einer Messelektrode 106 und einer Bezugselektrode 108 bildet sich eine Messkapazität 110 aus, welche mit einer diskreten Induktivität 109 zu dem als Serienschwingkreis ausgebildeten Messschwingkreis verschaltet ist.

Wird der Impedanzsensor von einem Medium umgeben, so wirkt dieses in der Messkapazität als Dielektrikum und verändert deren Kapazität, was wiederum der Messschwingkreis verstimmt und damit dessen Resonanzfrequenz verschiebt und auch die Signalamplitude des Antwortsignals im Bereich der Resonanzfrequenz verändert.

Die Messelektrode 106 ist rotationssymmetrisch zu einer Längsachse L des Impedanzsensors 100 ausgebildet und über eine Isolierung 107 von einem Prozessraum 90 getrennt. Die Bezugselektrode 108 ist bei dem vorliegenden Impedanzsensor 100 ebenfalls rotationssymmetrisch zu der Längsachse L ausgebildet. Die Bezugselektrode 108 ist dafür im vorliegenden Ausführungsbeispiel als Rohr ausgebildet, das gleichzeitig einen Teil eines Sensorgehäuses bildet. Die Messelektrode 106 ist in Richtung der Längsachse L gesehen vor dem Rohr angeordnet und von der an dem Rohr angeordneten Isolierung 107 umgeben. Die Isolierung 107 bildet gleichzeitig einen vorderseitigen Abschluss des Gehäuses.

Vorteilhafterweise wird die diskrete Induktivität 109 so gewählt, dass sich eine Resonanzfrequenz fres des Schwingkreises für unterschiedlichste Medien bzw. Bedeckungszustände (leer, voll und verschmutzt) zwischen 100 MHz und 200 MHz einstellt. Ein Betrag einer sich über die Frequenz ändernden komplexwertigen Impedanz |Z| dieses Messschwingkreises wird vorteilhafterweise zwischen 100 MHz und 200 MHz analysiert, d.h. der Messschwingkreis wird mittels eines Frequenzgenerators 103 mit einem Frequenzsweep mit Frequenzen zwischen 100 MHz und 200 MHz angeregt und ein Antwortsignal (Frequenzantwort) des Messschwingkreises mit einem Frequenzdetektor 104 detektiert. Befindet sich ein Medium im Bereich der Messsonde 102, ändert sich das Impedanzverhalten des Messschwingkreises, d.h. insbesondere verschiebt sich dessen Resonanzfrequenz fres, an der sich ein Minimum der Impedanz Z ausbildet.

Unter einem Frequenzsweep wird die sequenzielle Anregung mit einer Mehrzahl von aufeinander folgenden Frequenzen innerhalb eines Frequenzbereichs verstanden, wobei der Frequenzbereich idealerweise sämtliche möglichen Resonanzfrequenzen des Messschwingkreises enthalten sollte. Die Erzeugung der Schwingfrequenz erfolgt mit einem spannungsgesteuerten Oszillator (VCO) welcher über einen Digital-Analog-Konverter (DAC) eines Mikrocontrollers angesteuert wird. In einer Zeit von beispielsweise 100 ms soll der Frequenzbereich von 100 MHz bis 200 Mhz durchgesweept werden.

Die Änderung der Impedanz Z des Messschwingkreises wird für eine Auswertung in einer Auswerte- und Steuereinheit 105 herangezogen. Konkret wird die Frequenzantwort hinsichtlich einer Frequenzänderung Δf und einer Änderung der Amplitude eines Minimums der Impedanz Z, auch als Amplitudenänderung bezeichnet, ausgewertet und daraus ein Schaltbefehl generiert. Alternativ könnte die Auswertung aber auch bei einem Maximum der Impedanz Z erfolgen.

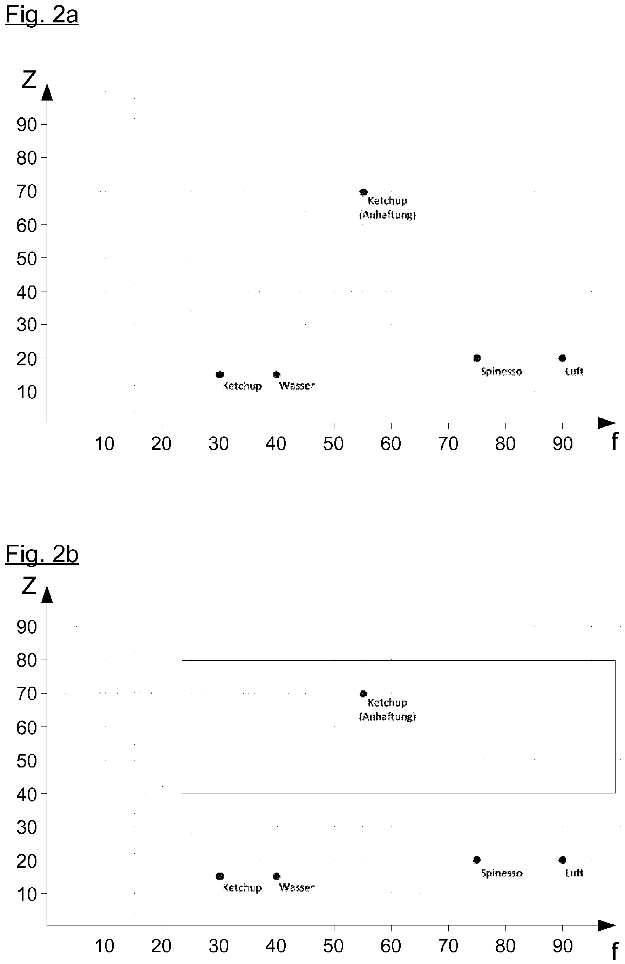

In den Figuren 2a und 2b ist für bekannte Impedanzsensoren 100, wie sie in Figur 1 beschrieben sind, die Lage des Minimums 304 der Amplitude der Impedanz Z für verschiedene Bedeckungszustände und Medien gezeigt. Die Abszisse des Koordinatensystems zeigt die Frequenz f, die Ordinate die Amplitude der Impedanz Z des empfangenen Antwortsignals. Die Frequenz ist in 0 % bis 100 % der Anregungsfrequenz f von 100 MHz bis 200 MHz dargestellt. Die Amplitude ist ebenfalls normiert auf die Amplitude des Anregungssignals von 0 % bis 100 % dargestellt.

Gezeigt ist die Lage der Minima des Antwortsignals d.h. die Lage des Resonanzpunktes bei einer Bedeckung der Sonde mit Ketchup, Wasser oder Spinesso, bei einer freien Sonde in Luft oder bei Anhaftung von Ketchup an der Sonde. Aus der Kenntnis über diese Minima des Antwortsignals, abhängig von dem zu detektierenden Medium kann der Messbereich des Impedanzsensors in drei Bereiche (bedeckt, unbedeckt, Anhaftung) unterteilt und mit den in Figur 2b dargestellten Schaltschwellen versehen werden.

Durch Störsignale, bspw. elektromagnetische Einstrahlungen von bspw. Pumpen oder Motoren, die in der Nähe des Impedanzsensors betriebenen werden, kommt es im Stand der Technik immer wieder zu Fehlschaltungen, da sowohl die Frequenz als auch die Amplitude der Impedanzkurve, insbesondere im Bereich des Minimums nicht mehr korrekt ermittelt werden kann.

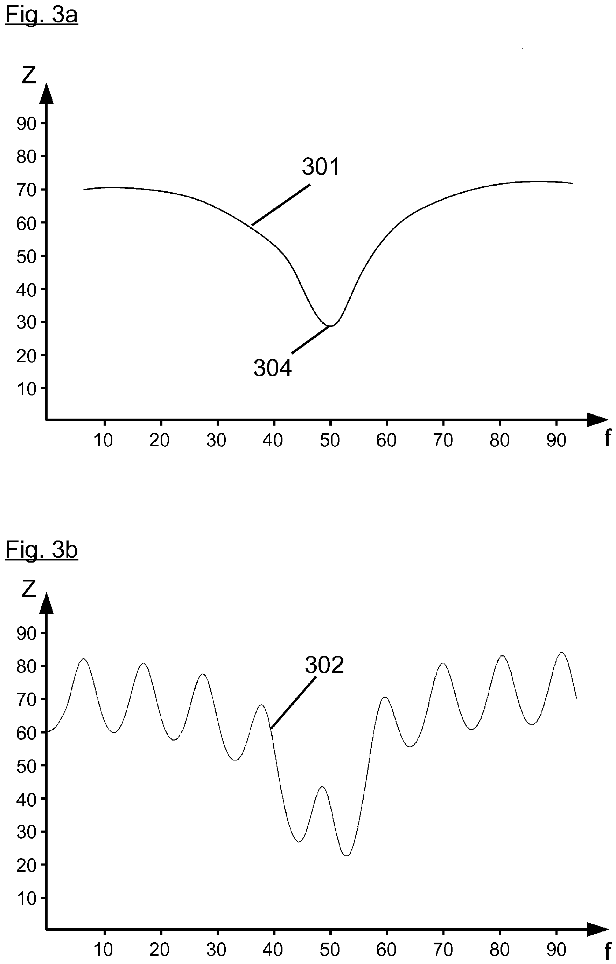

Eine beispielhaftes ungestörtes Antwortsignal 301 ist in Figur 3a dargestellt.

Ein Ausgangssignal des spannungsgesteuerten Oszillators (VCO) wird auf den Schwingkreis des Impedanzgrenzschalters gegeben, der in ungestörtem Zustand mit dem in Figur 3a dargestellten Impedanzverhalten reagiert. An der Resonanzstelle des Impedanzgrenzschalters 100 erhält man in der ungestörten Resonanzkurve 301 genau ein Minimum 304. Aus diesem Antwortsignal kann ein eindeutiges Minimum mit einer zuordenbaren Frequenz und Amplitude ermittelt werden. Wird dieses Antwortsignal durch elektromagnetische Störungen überlagert entsteht ein gestörtes Antwortsignal 302, wie es in Figur 3b gezeigt ist. Das gestörte Antwortsignal der Figur 3b weist eine Mehrzahl von Minima und Maxima bei unterschiedlichen Frequenzen f auf, die jeweils unterschiedliche Amplitudenwerte aufweisen. Aus diesem Signal kann die Lage des tatsächlichen Minimums nicht mehr zuverlässig ermittelt werden, sodass es im Stand der Technik zu Fehlschaltungen aufgrund der elektromagnetischen Störungen kommen kann.

Hier setzt die vorliegende Erfindung an.

Es ist die Aufgabe der vorliegenden Erfindung eine Verfahren zum Bestimmen eines Schaltzustands eines Impedanzsensors, insbesondere eines auf einer Impedanzbestimmung beruhenden Grenzstandschalters anzugeben, das trotz elektromagnetischer Störungen zuverlässig einen korrekten Messwert bzw. Schaltzustand ausgibt. Ferner ist es eine Aufgabe der vorliegenden Erfindung einen Grenzstandsensor anzugeben, der dieses Verfahren implementiert.

Diese Aufgaben werden durch ein Verfahren mit den Merkmalen des Patentanspruchs 1 sowie einen Grenzstandsensor mit den Merkmalen des Patentanspruchs 6 gelöst. Vorteilhafte Weiterbidlungen sind Gegenstand abhängiger Patentansprüche.

Ein erfindungsgemäßes Verfahren zum Bestimmen eines Schaltzustands eines Impedanzsensors mit einer Messsonde, die durch ein die Messsonde umgebendes Medium in einer Kapazität beeinflussbar ist, einem Messschwingkreis, in dem die Messsonde als kapazitätsbestimmendes Element angeordnet ist, einer Elektronikeinheit mit einem Signalgenerator zur Anregung des Messschwingkreises und einem Signaldetektor zur Ermittlung eines Antwortsignals des Messschwingkreises und einer Auswerte- und Steuereinheit, die mit der Elektronikeinheit verbunden ist weist folgende Schritte auf:
Zunächst wird der Signalgenerator mit einem Eingagnssignal angesteuert, woraufhin dieser eine Frequenzrampe, einen sog. Frequenzsweep an den Messchwingkreis ausgibt.

Es wird dann das Antwortsignal des Messschwingkreises ermittelt und ein Schaltzustand auf Basis eines Ausgabewerts ausgegeben, wobei der Ausgabewert wie folgt bestimmt wird.

Das erfindungsgemäße Verfahren zeichnet sich dadurch aus, dass eine Anzahl von Amplitudenminia der Frequenzantwort ermittelt wird, und für den Fall, dass genau ein Minimum ermittelt wird, dieses Minimum als Ausgabewert zur Bestimmung des Schaltzustands ausgegeben wird. Für den Fall, dass mehr als ein Minimum ermittelt wird, wird der Signalgenerator sequenziell mit einer Mehrzahl von Eingangssignalen angesteuert. Durch das sequenzielle Anteuern des Signalgenerators mit einer Mehrzahl von Eingangssignalen wird der Messschwingkreis sequenziell mit Antwortsignalen auf die von dem Signalgenerator erzeugten Frequenzsweeps reagieren.

Die Antwortsignale des Messschwingkreises werden in einem weiteren Schritt ermittelt und in einem nächsten Schritt eine Mittelwert aus den Antwortsignalen gebildet.

Anschließend wird das Minimum des Mittelwerts ermittelt und als Ausgabewert ausgegeben.

Der Mittelwert kann bspw. durch eine Scharmittelung ermittelt werden.

In einer vorteilhaften Ausgestaltung des Verfahrens wird der Signalgenerator mit einer Mehrzahl an Eingangssignalen, die wenigstens 5, vorzugsweise wenigstens 10 Eingangssignale umfasst, angeregt. Auf diese Weise kann eine Scharmittelung über wenigstens 5, vorzugsweise wenigstens 10 Antwortsignale durchgeführt werden, sodass das Signal-zu-Rauschverhältnis entsprechend verbessert wird.

Wird der Messschwingkreis mit mehreren identischen Signalen angeregt, so kann es bei periodischen Störungen dazu kommen, dass sämtliche Antwortsignale identisch gestört sind und dadurch keine Verbesserung des Signal-zu-Rauschverhältnisses eintritt. Wenn aber die Mehrzahl an Eingangssignalen wenigstens zwei unterschiedliche Eingangssignale umfasst kann erreicht werden, dass sich periodische Störungen in unterschiedlicher Art im Antwortsignal widerspiegeln, sodass durch eine Mittelung der Antwortsignale eine Verbesserung des Signal-zu-Rauschverhältnisses erreicht werden kann.

Eine einfache Möglichkeit zur Veränderung der Eingangssignale ist gegeben, wenn sich die Eingangssignale in ihrer Signaldauer unterscheiden und in ihrem Frequenzhub identisch sind. Auf diese Art werden unterschiedlich steile Frequenzrampen der Frequenzsweeps erzeugt, wodurch sich periodische Störungen unterschiedlich im Antwortsignal des Messschwingkreises niederschlagen.

Für gängige Impedanzgrenzstandsensoren kann es daher sinnvoll sein, wenn Frequenzsweeps mit einer Startfrequenz von 100 MHz bis zu einer Endfrequenz von 200 MHz durchlaufen werden, wobei die Frequenzsweeps vorzugsweise 10 unterschiedlichen Sweepdauern von 8 ms bis 17 ms mit vorzugsweise je einer ms Unterschied aufweisen. Auf diese Weise wird die Resonanzfrequenz jeweils zu einem unterschiedlichen Zeitpunkt im Frequenzsweep erreicht und damit unterschiedlich von den Störungen überlagert, sodass eine gute Rekonstruktion des ungestörten Antwortsignals möglich ist.

Die Frequenzsweeps können bspw. mit aufsteigender Sweepdauer durchlaufen werden. Eine zufällige Reihenfolge bringt den Vorteil, dass von Scharmittelung zu Scharmittelung die gewonnenen Messergebnisse nicht vom selben Anregesignal resultieren. Konstante Störsignale können damit besser unterdrückt werden.

Ein erfindungsgemäßer Grenzstandschalter mit einer Messsonde, die durch ein die Messsonde umgebendes Medium in einer Kapazität beeinflussbar ist, einem Messschwingkreis, in dem die Messsonde als kapazitätsbestimmendes Element angeordnet ist, einer Elektronikeinheit mit einem Signalgenerator zur Anregung des Messschwingkreises und einem Signaldetektor zur Ermittlung eines Antwortsignals des Messschwingkreises und einer Auswerte- und Steuereinheit, die mit der Elektronikeinheit verbunden ist, zeichnet sich dadurch aus, dass der Grenzstandschalter zur Durchführung des oben beschriebenen Verfahrens ausgebildet ist.

Dies kann bspw. dadurch erfolgen, dass die Auswerte- und Steuereinheit eine Einheit zur Scharmittelung aufweist.

Zusätzlich kann die Auswerte- und Steuereinheit geeignet ausgebildet sein, den Frequenzgenerator mit einer Mehrzahl unterschiedlicher Eingangssignale anzuregen, sodass sich periodische Störungen unterschiedlich in einem Antwortsignal des Messschwingkreises niederschlagen.

Der Ausgabewert kann durch Bestimmung eines Minimums ermittelt werden. Das Minimum kann bspw. durch bilden der ersten Ableitung und Nullsetzten oder durch numerische Ansätze ermittelt werden.

Die vorliegende Erfindung wird nachfolgend anhand von Ausführungsbeispielen unter Bezugnahme auf die beigefügten Figuren eingehend erläutert. Es zeigen:
- Figur 1: einen Impedanzsensor gemäß dem Stand der Technik (schon behandelt),
- Figuren 2a und 2b: die Lage der Minima im Antwortsignal eines Impedanzsensors für unterschiedliche Bedeckungszustände und Medien (schon behandelt),
- Figuren 3a und 3b: ein ungestörtes und ein gestörtes Antwortsignal des Impedanzsensors gemäß Figur 1 (schon behandelt),
- Figur 4a: eine graphische Darstellung des Vorgehens zur Ermittlung des tatsächlichen, ungestörten Antwortsignals,
- Figur 4b: einen Vergleich der mit dem Verfahren der vorliegenden Anmeldung ermittelten Kurve und dem ungestörten Antwortsignal und
- Figur 5: ein Ablaufdiagramm des Verfahrens zur Bestimmung des Schaltzustands gemäß der vorliegenden Anmeldung.

In den Figuren bezeichnen - soweit nicht anders angegeben - gleiche Bezugszeichen gleiche Komponenten mit gleicher Funktion.

Der Aufbau des Impedanzsensors 100 gemäß der vorliegenden Anmeldung entspricht im Wesentlichen dem aus dem Stand der Technik bekannten und in Zusammenhang mit Figur 1 beschriebenen Aufbau. Der Aufbau der Messsonde 102 entspricht dem aus dem Stand der Technik bekannten Aufbau, wobei abweichend zu der Darstellung in Figur 1 auch jeder andere geeignete Aufbau einer Messsonde 102 für einen Impedanzsensor 100 gewählt werden kann.

Das Verfahren zum Bestimmen eines Schaltzustands eines Impedanzsensors 100 zeichnet sich dadurch aus, dass für den Fall, dass ein gestörtes Antwortsignal 302, wie es in Figur 3b dargestellt ist, empfangen wird, erkannt wird, dass das gestörte Antwortsignal 302 eine Mehrzahl von Minima aufweist. Mit dieser Erkenntnis wird der Messschwingkreis des Impedanzsensors 100 mit einer Mehrzahl von Frequenzsweeps, im vorliegenden Ausführungsbeispiel 10 Frequenzsweeps, sequenziell beaufschlagt. Die einzelnen Frequenzsweeps weisen jeweils einen Frequenzhub von 100 MHz auf und durchlaufen einen Frequenzbereich von 100 MHz bis 200 MHz, unterscheiden sich aber voneinander in der Dauer der Frequenzsweeps. Dies führt dazu, dass die einzelnen Frequenszsweeps sich in der Steigung der durchfahrenen Frequenzrampe unterscheiden.

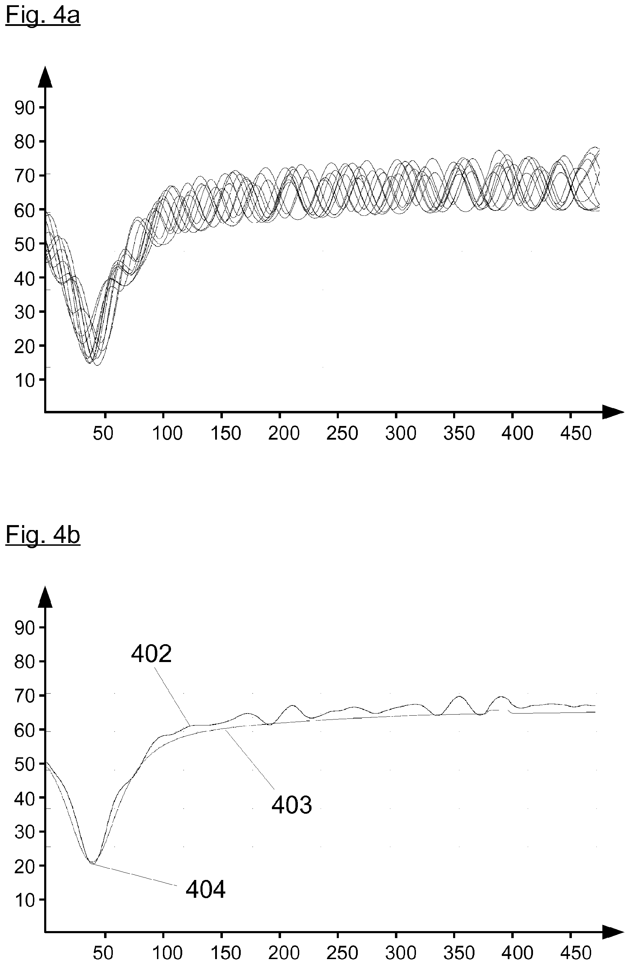

Die Antwortsignale auf eine solche Anregung des Messschwingkreises sind in Figur 4a dargestellt.

Basierend auf dieser Schar von Antwortsignalen, die allesamt von dem Störsignal überlagert sind, wird eine Mittelwertbildung über die einzelnen Antwortsignale durchgeführt und damit das in Figur 4b dargestellte Mittelwertsignal 402 erhalten. Zum Vergleich ist in Figur 4b auch das ungestörte Antwortsignal 403 eingezeichent. Wie aus Figur 4b hervogeht weicht das Mittelwertsignal 402 von dem ungestörten Antwortsignal, insbesondere im Bereich des Minimums 404 nur sehr wenig ab.

Versuche haben ergeben, dass mit dem vorliegenden Verfahren bereits ab 4 Frequenzsweeps und einer entsprechenden Anzahl an Antwortsignalen das Minimum des ungestörten Antwortsignals mit einer Genauigkeit von +/-2 % bestimmt [werden kann. Ab 16 Frequenzsweeps wird eine Genauigkeit von +/-0.5 % erreicht, was für alle üblichen Anwendungsfälle ausreichend ist, sodass eine weitere Erhöhung der Zahl der Frequenzsweeps in der Regel nicht sinnvoll ist.

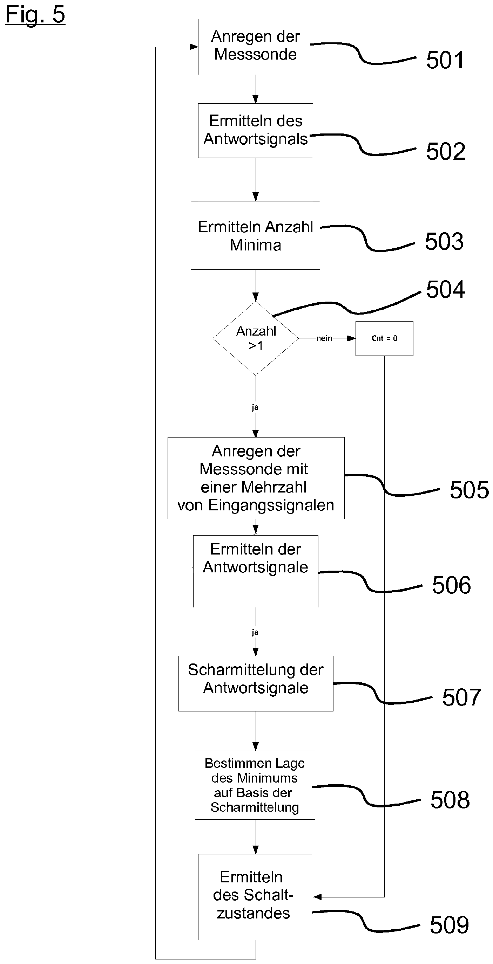

Figur 5 zeigt ein Ablaufdiagramm eines beispielhaften Verfahrens zum Bestimmen eines Schaltzustands eines Impedanzsensors 100 gemäß der vorliegenden Anmeldung.

In einem ersten Schritt 501 wird die Messsonde 102 des Impedanzsensors 100 angeregt. Dies geschieht mit einem Frequenzsweep in einem Frequenzbereich, in dem die Resonanzfrequenz fres des Impedanzsensors 100 erwartet wird. Im vorliegenden Ausführungsbeispiel wird die Resonanzfrequenz fres das Impedanzsensors 100 aufgrund der Dimensionierung der Bauelemente im Messschwingkreis in einem Bereich zwischen 100 MHz und 200 MHz erwartet. Die Messsonde 102 des Impedanzsensors 100 wird daher mit einem Frequenzsweep von 100 MHz bis 200 MHz angeregt.

In einem zweiten Schritt 502 wird ein Antwortsignal der Messsonde 102 ermittelt. Das Antwortsignal wird bezüglich seiner Impedanz Z in Bezug auf die Frequenz f des Anregungssignals bestimmt.

In einem dritten Schritt 503 wird eine Anzahl der in dem Antwortsignal enthaltenen Minima ermittelt.

Wird in einem vierten Schritt 504 festgestellt dass genau ein Minimum in dem Antwortsignal enthalten ist, so wird die Lage dieses Minimums zur Ermittlung des Schaltzustandes des Impedanzsensors 100 in einem neunten Schritt 509 verwendet. Wird in dem vierten Schritt 504 jedoch eine Anzahl von Minima ermittelt, die größer als "1" ist, so wird die Messsonde 102 in einem fünften Schritt 505 mit einer Mehrzahl von Eingangssignalen sequenziell angeregt.

Die sequenzielle Anregung der Messsonde 102 mit einer Mehrzahl von Eingangssignalen erfolgt im vorliegenden Ausführungsbeispiel des Verfahrens derart, dass die Messsonde 102 mit zehn Frequenzsweeps mit einer Startfrequenz von 100 MHz und einer Endfrequenz von 200 MHz angeregt wird, wobei die einzelnen Frequenzsweeps jeweils unterschiedliche Sweepdauern aufweisen. Die Frequenzsweeps werden mit einer Sweepdauer von 7-16 ms und einer Abstufung von jeweils 1 ms durchgeführt.

Nach jeder Anregung der Messsonde 102 mit einem Frequenzsweep wird ein Antwortsignal der Messsonde 102 in einem sechsten Schritt 506 ermittelt, wobei die Antwortsignale zwischengespeichert werden.

Anschließend wird in einem siebten Schritt 507 ein Mittelwert über die zehn erhaltenen Antwortsignal gebildet. Aus diesem Mittelwert wird in einem achten Schritt 508 das Minimum bestimmt und auf Basis der Lage dieses Minimums in dem neunten Schritt 509 der Schaltzustand des Impedanzsensors 100 bestimmt.

Es sei an dieser Stelle angemerkt, dass die Anzahl von zehn Anregungssignalen hier lediglich beispielhaft genannt ist und jede Anzahl von Anregungssignal und dazu korrespondierenden Antwortsignalen mit der eine hinreichende Genauigkeit der Annäherung an das ungestörte Antwortsignal erreicht wird für die Durchführung des vorliegenden Verfahrens gewählt werden kann.

### Bezugszeichenliste

- 100: Impedanzsensor
- 101: Elektronikeinheit
- 102: Messsonde
- 103: Frequenzgenerator / Signalgenerator
- 104: Frequenzdetektor / Signaldetektor
- 105: Auswerte- und Steuereinheit
- 106: Messelektrode
- 107: Isolierung
- 108: Bezugselektrode
- 109: Induktivität
- 110: Messkapazität

- 301: ungestörtes Antwortsignal
- 302: gestörtes Antwortsignal
- 304: Minimum

- 402: Mittelwert
- 403: Ungestörtes Antwortsignal
- 404: Minimum

- 501-509: Verfahrensschritte

- f: Frequenz
- fres: Resonanzfrequenz
- Z: Impedanz/Amplitude

## Patentansprüche

1. Verfahren zum Bestimmen eines Schaltzustands eines Impedanzsensors (100) mit
- einer Messsonde (102), die durch ein die Messsonde (102) umgebendes Medium in einer Kapazität beeinflussbar ist,
- einem Messschwingkreis, in dem die Messsonde (102) als kapazitätsbestimmendes Element angeordnet ist,
- einer Elektronikeinheit (101) mit einem Signalgenerator (103) zur Anregung des Messschwingkreises und einem Signaldetektor (104) zur Ermittlung eines Antwortsignals des Messschwingkreises und
- einer Auswerte- und Steuereinheit (105), die mit der Elektronikeinheit (101) verbunden ist mit folgenden Schritten:
- Ansteuern des Signalgenerators (103) mit einem Eingagnssignal,
- Ermitteln des Antwortsignals des Messschwingkreises,
- Ausgeben eines Schaltzustandes auf Basis eines Ausgabewerts,
**gekennzeichnet, durch** die Schritte:
- Ermitteln einer Anzahl von Amplitudenminia der Frequenzantwort,
- für den Fall, dass genau ein Minimum (304) ermittelt wird, ausgeben des Minimums als Ausgabewert,
- für den Fall, dass mehr als ein Minimum ermittelt wird, sequenzielles Anteuern des Signalgenerators (103) mit einer Mehrzahl von Eingangssignalen,
- Ermitteln der Antwortsignale des Messschwingkreises und
- Bilden eines Mittelwertes aus den Antwortsignalen
- Ermitteln und Ausgeben des Minimums des Mittelwerts als Ausgabewert.

2. Verfahren gemäß Patentanspruch 1,
**dadurch gekennzeichnet, dass**
die Mehrzahl an Eingangssignalen wenigstens 5, vorzugsweise wenigstens 10 Eingangssignale umfasst.

3. Verfahren gemäß einem der vorhergehenden Patentansprüche,
**dadurch gekennzeichnet, dass**
die Mehrzahl an Eingangssignalen wenigstens zwei unterschiedliche Eingangssignale umfasst.

4. Verfahren gemäß einem der vorhergehenden Patentansprüche,
**dadurch gekennzeichnet, dass**
sich die Eingangssignale in ihrer Signaldauer unterscheiden und in ihrem Frequenzhub identisch sind.

5. Verfahren gemäß einem der vorhergehenden Ansprüche,
**dadurch gekennzeichnet, dass** Frequenzsweeps mit einer Startfrequenz von 100 MHz zu einer Endfrequenz von 200 MHz durchlaufen werden, wobei die Frequenzsweeps vorzugsweise 10 unterschiedlichen Sweepdauern von 8 ms bis 17 ms mit je einer ms unterschied aufweisen.

6. Verfahren gemäß Patentanspruch 5,
**dadurch gekennzeichnet, dass**
die Frequenzsweeps mit aufsteigender Sweepdauer durchlaufen werden.

7. Verfahren gemäß Patentanspruch 5,
**dadurch gekennzeichnet, dass**
die Frequenzsweeps mit einer zufälligen Reihenfolge der Sweepdauer durchlaufen werden.

8. Grenzstandschalter mit einer Messsonde (102), die durch ein die Messsonde (102) umgebendes Medium (304) in einer Kapazität beeinflussbar ist,
- einem Messschwingkreis, in dem die Messsonde (102) als kapazitätsbestimmendes Element angeordnet ist,
- einer Elektronikeinheit (101) mit einem Signalgenerator (103) zur Anregung des Messschwingkreises und einem Signaldetektor (104) zur Ermittlung eines Antwortsignals des Messschwingkreises und
- einer Auswerte- und Steuereinheit (105), die mit der Elektronikeinheit (101) verbunden ist,
**dadurch gekennzeichnet, dass** der Grenzstandschalter ausgebildet ist zur Durchführung des Verfahrens gemäß einem der vorhergehenden Ansprüche.

9. Grenzstandschalter gemäß Anspruch 8,
**dadurch gekennzeichnet, dass** Auswerte- und Steuereinheit (105) eine Einheit zur Scharmittelung aufweist.

10. Grenzstandschalter gemäß einem der Patentansprüche 8 oder 9,
**dadurch gekennzeichnet, dass**
die Auswerte- und Steuereinheit (105) geeignet ausgebildet ist, den Frequenzgenerator (103) mit einer Mehrzahl unterschiedlicher Eingangssignale anzuregen.

## Claims

1. A method for determining a switching status of an impedance sensor (100) comprising
- a measuring probe (102), which can be influenced in its capacity by a medium surrounding the measuring probe (102),
- a measuring oscillator circuit, in which the measuring probe (102) is arranged as a capacity-determining element,
- an electronic unit (101) with a signal generator (103) to excite the measuring oscillator circuit and a signal detector (104) to determine a response signal of the measuring oscillator circuit, and
- an evaluation and control unit (105) connected to the electronic unit (101) with the following steps:
- addressing the signal generator (103) with an input signal,
- determining the response signal of the measuring oscillator circuit,
- issuing a switching status based on the output value,
**characterized in that** the steps:
- determining a plurality of amplitude minima of the frequency response,
- in the event that precisely one minimum (304) is determined, issuing the minimum as the output value,
- in the event that more than one minimum is detected, sequentially addressing the signal generator (103) with a plurality of input signals,
- determining the response signals of the measuring oscillator circuit, and
- forming an average from the response signals
- determining and issuing the minimum of the average as the output value.

2. A method according to claim 1,
**characterized in that**
the plurality of input signals includes at least 5, preferably at least 10 input signals.

3. A method according to any of the previous claims,
**characterized in that**
the plurality of input signals includes at least two different input signals.

4. A method according to any of the previous claims,
**characterized in that**
the input signals differ in their signal period and their frequency strokes are identical.

5. A method according to any of the previous claims,
**characterized in that**
frequency sweeps are performed with a start sequence from 100 MHz to an end sequence of 200 MHz, with the frequency sweeps preferably showing 10 different sweep periods from 8 ms to 17 ms with respectively a difference of one ms each.

6. A method according to claim 5,
**characterized in that**
the frequency sweeps are processed with increasing sweeping periods.

7. A method according to claim 5,
**characterized in that**
the frequency sweeps are processed with an arbitrary sequence of the sweeping periods.

8. A limit switch comprising a measuring probe (102) that can be influenced in its capacity by a medium (304) surrounding the measuring probe (102),
- comprising a measuring oscillator circuit, in which the measuring probe (102) is arranged as a capacity-determining element,
- an electronic unit (101) with a signal generator (103) for exciting the measuring oscillator circuit and a signal detector (104) to determine a response signal of the measuring oscillator circuit, and
- an evaluation and control unit (105), connected to the electronic unit (101),
**characterized in that**
the limit switch is embodied to implement the method according to any of the previous claims.

9. A limit switch according to claim 8,
**characterized in that**
the evaluation and control unit (105) comprises a unit for clutch averaging.

10. A limit switch according to any of claims 8 or 9,
**characterized in that**
the evaluation and control unit (105) is embodied in a suitable fashion to excite the frequency generator (103) with a plurality of different input signals.

## Revendications

1. Procédé de détermination d'un état de commutation d'un capteur d'impédance (100) comprenant
- une sonde de mesure (102) qui peut être influencée en une capacité par un milieu entourant la sonde de mesure (102),
- un circuit résonant de mesure dans lequel la sonde de mesure (102) est agencée comme élément déterminant la capacité,
- une unité électronique (101) ayant un générateur de signaux (103) destiné à exciter le circuit résonant de mesure ainsi qu'un détecteur de signaux (104) destiné à déterminer un signal de réponse du circuit résonant de mesure, et
- une unité d'évaluation et de commande (105) qui est connectée à l'unité électronique (101), comprenant les étapes suivantes consistant à:
- commander le générateur de signaux (103) avec un signal d'entrée,
- déterminer le signal de réponse du circuit résonant de mesure,
- délivrer un état de commutation sur la base d'une valeur de sortie,
**caractérisé par** les étapes consistant à:
- déterminer un nombre de minimums d'amplitude de la réponse de fréquence,
- dans le cas où exactement un minimum (304) est déterminé, délivrer le minimum en tant que valeur de sortie,
- dans le cas où plus d'un minimum est déterminé, commander de manière séquentielle le générateur de signaux (103) avec une pluralité de signaux d'entrée,
- déterminer les signaux de réponse du circuit résonant de mesure et
- former une valeur moyenne à partir des signaux de réponse
- déterminer et délivrer le minimum de la valeur moyenne en tant que valeur de sortie.

2. Procédé selon la revendication 1, **caractérisé par le fait que** la pluralité de signaux d'entrée comprend au moins 5, de préférence au moins 10 signaux d'entrée.

3. Procédé selon l'une quelconque des revendications précédentes, **caractérisé par le fait que** la pluralité de signaux d'entrée comprend au moins deux signaux d'entrée différents.

4. Procédé selon l'une quelconque des revendications précédentes, **caractérisé par le fait que** les signaux d'entrée se distinguent par leur durée de signal et sont identiques quant à leur déviation de fréquence.

5. Procédé selon l'une quelconque des revendications précédentes, **caractérisé par le fait que** des balayages fréquentiels avec une fréquence initiale de 100 MHz à une fréquence finale de 200 MHz sont parcourus, dans lequel les balayages fréquentiels présentent de préférence 10 durées de balayage différents comprises entre 8 ms et 17 ms, chacune ayant une différence de ms.

6. Procédé selon la revendication 5, **caractérisé par le fait que** les balayages fréquentiels sont parcourus avec une durée de balayage croissante.

7. Procédé selon la revendication 5, **caractérisé par le fait que** les balayages fréquentiels sont parcourus avec un ordre aléatoire de la durée de balayage.

8. Interrupteur de niveau limite comprenant une sonde de mesure (102) qui peut être influencée en une capacité par un milieu entourant la sonde de mesure (102),
- un circuit résonant de mesure dans lequel la sonde de mesure (102) est agencée comme élément déterminant la capacité,
- une unité électronique (101) ayant un générateur de signaux (103) destiné à exciter le circuit résonant de mesure ainsi qu'un détecteur de signaux (104) destiné à déterminer un signal de réponse du circuit résonant de mesure, et
- une unité d'évaluation et de commande (105) qui est connectée à l'unité électronique (101),
**caractérisé par le fait que**
ledit interrupteur de niveau limite est conçu pour mettre en œuvre le procédé selon l'une quelconque des revendications précédentes.

9. Interrupteur de niveau limite selon la revendication 8, **caractérisé par le fait que** l'unité d'évaluation et de commande (105) présente une unité de formation de moyenne d'ensemble.

10. Interrupteur de niveau limite selon l'une quelconque des revendications 8 ou 9,
**caractérisé par le fait que** l'unité d'évaluation et de commande (105) est conçue de manière appropriée pour exciter le générateur de fréquence (103) avec une pluralité de signaux d'entrée différents.
